# EUROPEAN PATENT SPECIFICATION

(11) **EP 2 183 537 B1**
(45) Date of publication and mention of the grant of the patent: **23.11.2016**
(21) Application number: 08794084.7
(22) Date of filing: 21.07.2008
(51) Int. Cl.: F28D 1/00, F24D 19/00, F24H 3/02, F24H 9/00, F24F 1/00, F28D 1/02

(54) **FLEXIBLE MOUNTING AND INSTALLATION SYSTEM WITH COMPONENTS SPECIALLY ADAPTED FOR THE TRANSPORT OF AIR**
FLEXIBLES BEFESTIGUNGS- UND INSTALLATIONSSYSTEM MIT SPEZIELL FÜR LUFTTRANSPORT AUSGELEGTEN KOMPONENTEN
SYSTÈME DE MONTAGE ET D'INSTALLATION FLEXIBLE AVEC DES COMPOSANTS SPÉCIALEMENT CONÇUS POUR LE TRANSPORT D'AIR

(30) Priority: 23.07.2007 SE 0701765
(43) Date of publication of application: 12.05.2010
(73) Proprietor: Lindgren, Herbert, 702 25 Örebro (SE)
(72) Inventor: Lindgren, Herbert, 702 25 Örebro (SE)
(74) Representative: Hering, Hartmut
(86) International application number: PCT/SE2008/000453
(87) International publication number: WO 2009/014478

(56) References cited:
- WO-A1-2007/067082
- WO-A1-2007/067082
- WO-A2-02/12797
- DE-U1- 20 216 099
- US-A- 2 069 190
- US-A- 2 151 725

## Description

### TECHNICAL BACKGROUND

In order to increase the extraction of energy from a heated or cooled unit often referred to as a radiator, there is sometimes a need to increase the transport of air around said unit. If the radiator is hotter than the surrounding air, heat transfer can be increased by increasing the speed of the air flow past the radiator's surface. In the same way, the exchange from a cold surface can be increased by increasing the speed of the air flow past the cooled unit.

A common problem today is that traditional buildings with waterborne heating systems are often dimensioned for high boiler temperatures. Thus, the temperature of the outgoing water that is to be transported around the radiators is relatively high. Such temperatures are normally generated using electric boilers or boilers fired by wood, pellets or oil. If such a system is altered and the heat source changed to an air or geothermal energy system, it is not economical to produce high-temperature heat. At temperatures that are too high, the heat pump shuts down and electrical heaters produce the heat. Heat pump manufacturers recommend low-temperature radiators. Using the present device, low-temperature radiators are a common element in the system. There can be unpleasant consequences if, because of a lower boiler temperature, the radiators designed for the heat requirements of the premises cannot give off sufficient heat. A solution to said problem is to increase the air flow around the radiator and thereby extract more energy from the radiator.

If more heat is required, a radiator is normally replaced with one that has a larger surface. Rather than increasing a radiator's surface by investing in a larger unit (and installation thereof), great savings are made, from a financial point of view, by choosing, instead of said unit, the air transporter described herein. Furthermore, a larger radiator takes up more space and is perceived as less aesthetically pleasing than a smaller one.

As the output temperature from a heat pump can be held lower by using said air transporter unit to increase the efficiency of the radiators, the efficiency of the heat pump increases by up to 40% with a correspondingly much lower energy consumption. At the same time, compressor pressure falls. This must be good for its service life.

There is often a wish that the rebuilding of a kitchen should provide more work surfaces. As a result, worktops are sometimes built over radiators. This considerably impedes ventilation and heat transfer. In such cases, the air transporter described in this document supplies a solution. The same applies where furniture, curtains, window sills, radiator covers or anything else reduce heat emissions from a radiator - the device in this document can compensate for the reduction.

Experience shows that radiators in basements are often too small and, consequently, that it is difficult to achieve good heat distribution. Findings from tests using the described air transporter have been very good. After installation of said air transport system, basement areas are perceived to have better, drier and healthier air. There is less "stagnant" air with its associated unpleasant odour. The air flow can be suitably controlled using a system, as described in this document, comprising a modularly built air transporter unit.

Now, when energy prices are so high and we so clearly see the need to save energy, the technology here described offers many new possibilities to lower the temperature in, for example, public buildings such as churches, large meeting places and other premises that are used on certain days only. There is then also a concomitant need to rapidly raise the heat. In churches, which have high ceilings, this air transporter unit can considerably shorten the heating time. Of course, this is the case for all rooms and buildings where it is desired to rapidly raise the heat provided by radiators in waterborne systems. Without the fans, heat rises to the roof, descends slowly and finally heats the floor. Using this device, the cold air at the floor is sucked in by the fans and is heated far more rapidly by the radiator.

The technology of using a fan to increase air flow at a radiator is already known. See, for example, American patent 2069732 (granted in 1937). This is very different from the module system that, described in the present document, uses independent components (in a system) to "tailor" a solution for widely varying sizes and designs of radiators.

WO 02/12797 A2 discloses a modularized mounting and installation system, wherein a number of heat exchangers are disposed adjacent a floor or ceiling. A fan unit is disposed adjacent the heat exchanger and draws or blows cooled air from the heat exchanger and directs the drawn air into the room. The fan unit can be repositioned.

Where spaces are to be cooled (that is, in contrast to the above, the temperature is to be lowered), this can be done by cooling the radiators via the medium flowing through these, the purpose being to lower the ambient temperature. To prevent moisture condensing on the radiator, some sort of dehumidifying device is required. A device that shuts off the cooling when there is condensation can be added to the unit. A larger variant could include an air dehumidifier integrated, more or less, in the unit.

A fundamental idea in the described system of units is, simply put, "IKEA model". In other words, the customer buys the components he/she needs and carries out mounting and installation himself/herself. To the benefit of the consumer, this lowers costs at all stages. From today's modem, slimline models to the older, heavier models still used in older buildings, the sizes and designs of various radiators are well known.

The system described in this document gives flexibility in two dimensions, i.e. width and depth. As the modules can be combined in different ways (see figures), this also means that it is easy to avoid having the fan exactly opposite an obstruction, e.g. a radiator feed pipe in the middle of the radiator. The width module should preferably be 5 cm with any length extension. The depth can be varied linearly to accommodate from one fan to any number of fans. Using a special connecting unit of fans, the depth does not need to be altered in steps of one fan unit (see explanatory figures).

There is no known fan unit on the market that takes into account all these designs. For this reason, the fan answers a real consumer need.

### BRIEF ACCOUNT OF THE INVENTION

### A FIRST DESIGN POSSIBILITY

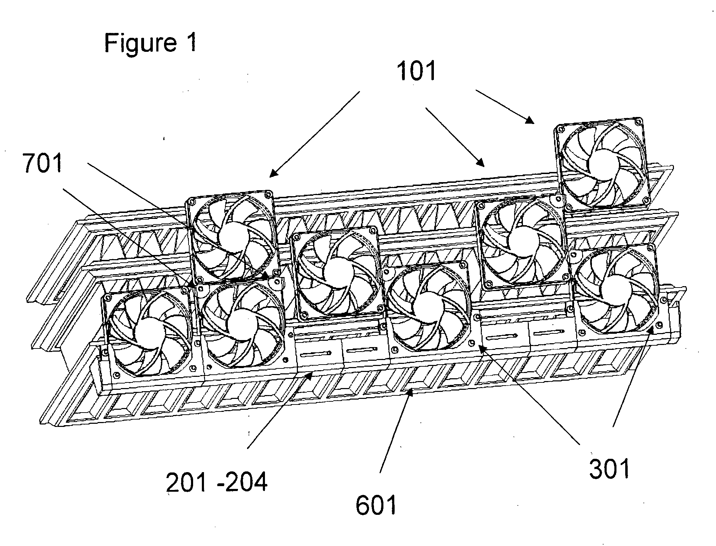

In a first design possibility (see figure 1), the unit comprises a fan and electric motor (101) suspended using rubber straps (301). The rubber straps make mounting easy and also reduce the propagation and transportation (through/to other system components) of any fan vibrations. The rigid mounting of a vibrating unit to a rigid body such as a profile generates structure-borne sound. The fans (101) are of a design that is often used for the normal cooling of computer equipment and similar. The chosen fan manufacturer employs a unique property that, as a function of the amount of power supplied, allows the speed to be adjusted within a wide range (using an electric fan with easily adjustable speed).

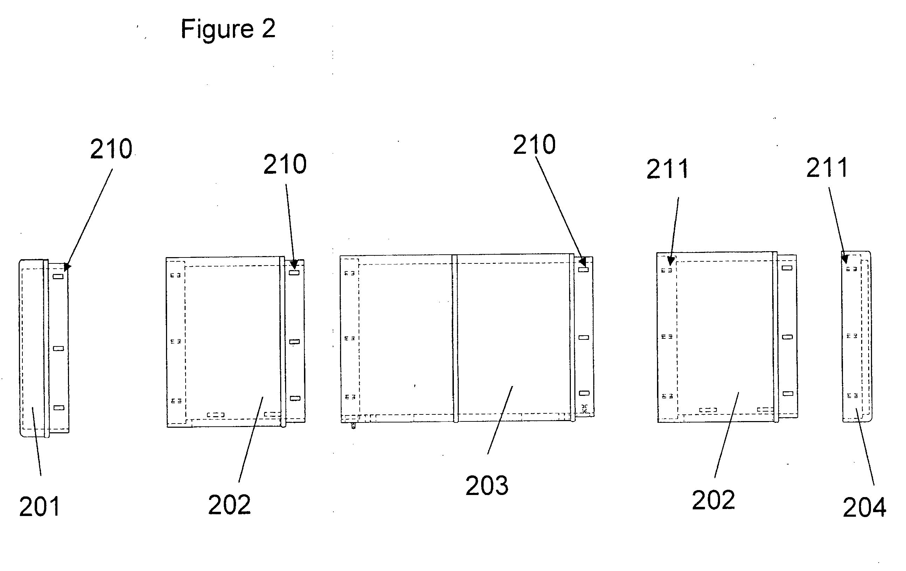

In this design, the components for guiding the air are chassis components (202 and 203) in plastic. They are manufactured in a specially designed mould. The chassis has special cut-outs that, via a snap-fit arrangement, enable the connection of further chassis. Mounting is therefore very simple and there is great flexibility. The chassis component (203) to which the fan (101) is mounted has an intermediate piece (202) without a fan and side pieces (201 and 204) - see figure 2, which shows all plastic components. These are all manufactured in the same way and, for easy mounting, also have said snap-fit function. For increased flexibility, the components can be combined in various ways. The number of fans can be increased or decreased and obstacles can be bypassed without this being visible from the front. The fan (fans) is (are) mounted in the chassis using said rubber straps (301) in a simple fashion. Strap diameter decreases when the strap is elongated and, in this way, the strap can be mounted in the holes in the chassis and the corresponding mounting holes in said fan's frame.

### SHORT DESCRIPTION OF THE FIGURES

The present invention is described in some detail with the assistance of the following figures:
Figure 1 shows a mounted unit installed on a radiator.
Figure 2 shows various chassis components in the module system.
Figure 3 shows a component for mounting fan to chassis.
Figure 4 shows mounting components.
Figure 5 shows mounting components.
Figure 6 shows a mounted fan unit.
Figure 7 shows a special component.

### DETAILED DESCRIPTION OF A PREFERRED DESIGN OF THE INVENTION

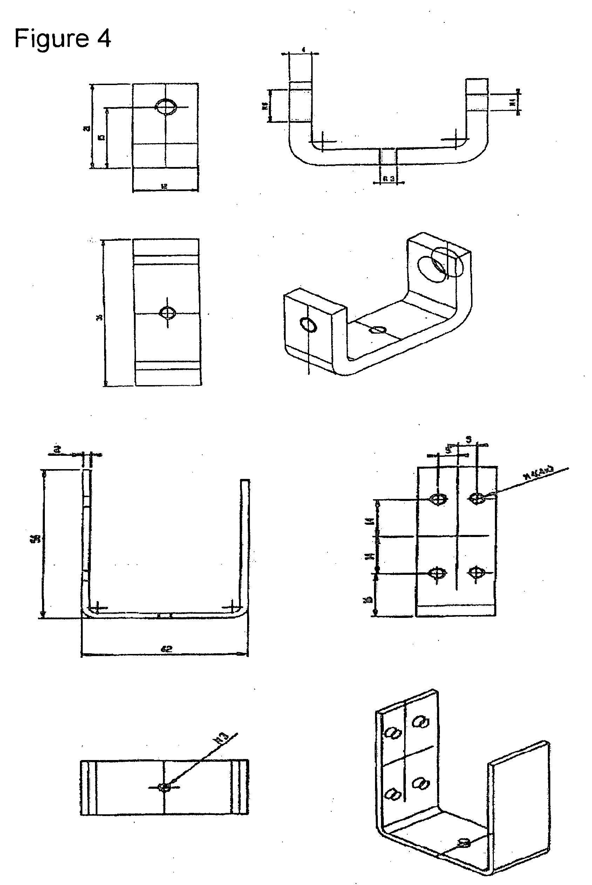

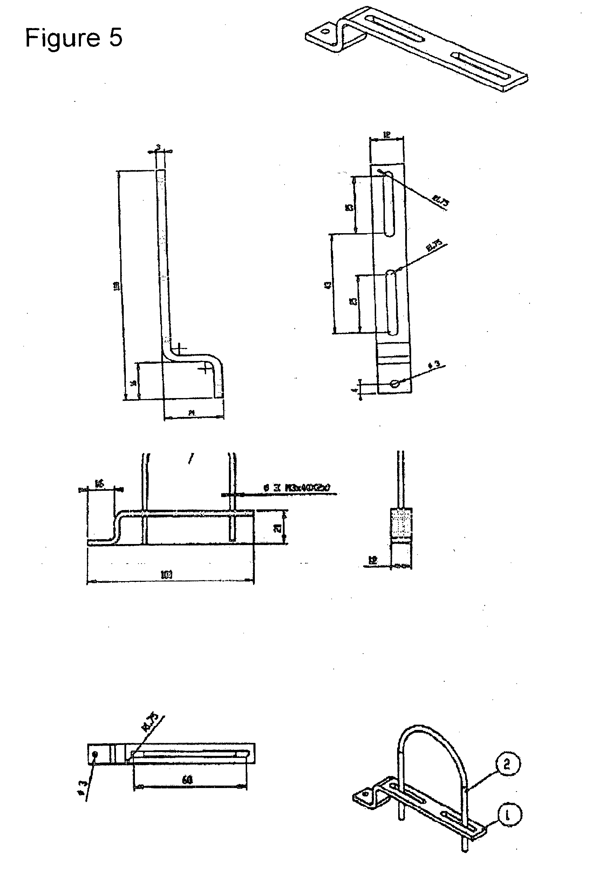

Figure 1 shows a design in which a fan element is made up of a number of fans (101). There are mounting components (see figures 4 and 5) for holding the arrangement in place and a chassis that is made up of a number of plastic modules (see figure 2). The unit is mounted to a radiator (601).

The module system for chassis components as in figure 2 is, in the preferred design, made in plastic, an injection method being used to form the design's components in a mould. Retaining the same function of allowing fans to be mounted to the chassis (the chassis also guiding air flows as desired), the chassis components can also be made in sheet metal or any other suitable material. In this design, there are 5 individual plastic components in the chassis. However, the invention is not tied to this design or number of components.

Figure 2 shows how a small module can be built up from the chassis components: left side piece (201), intermediate piece (202), fan mounting component (203) and right side piece (204). The design of the plastic components includes a simple snap-fit function comprising holes (210) that, along with specially designed tabs (211), allow the components to be easily "snapped together". The tabs (211) are pushed into said holes (210), the fit being designed to make the unit stable. The described mounting method is particularly suitable for "DIYers" who, with a simple description, can carry out mounting quickly and reliably with no further mounting components or extras such as glue, etc.

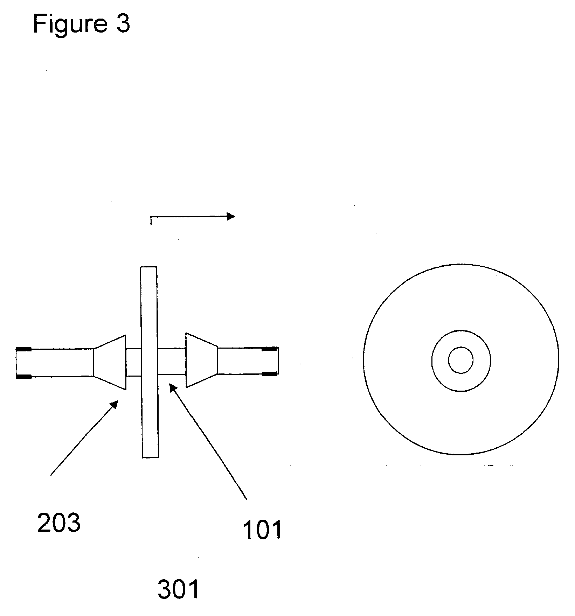

Figure 3 shows a mounting element (301), preferably in a material with rubberlike properties, that allows the fan (101) to be easily mounted to the chassis without using screws or other common fastening components. The mounting element is elongated by stretching it lengthways after one end has been inserted in the appropriate mounting hole in the fan's chassis. Elongation decreases the diameter and the element can be pulled into the fan's hole. When stretching is released, the mounting element, thanks to its profiles, sits securely in the hole. In the same way, the fan is then mounted in the corresponding mounting hole in the chassis (203). An easier mounting method is hard to imagine and there is the additional advantage that vibrations from the fan's rotation are not transmitted and/or amplified in/by the chassis components.

Figures 4 and 5 show components for mounting the fan unit to various types of radiators. The final number of variants has not been decided, but the figures show example designs.

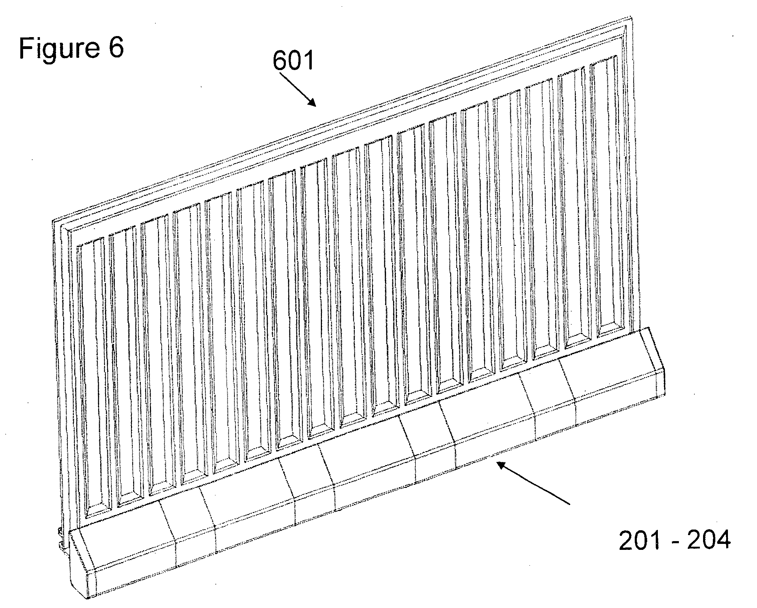

Figure 6 shows (viewed from above) a fan unit mounted to a radiator (601).

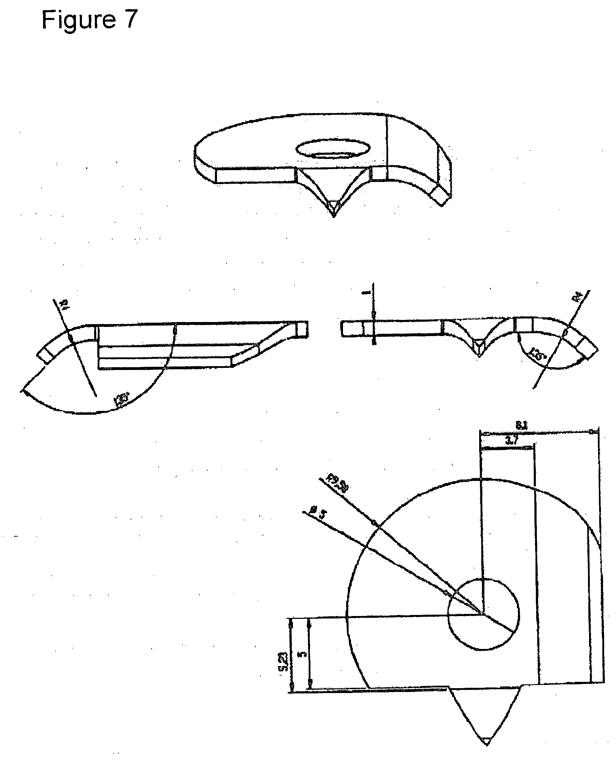

Figure 7 shows how a special component (701) can be used to vary the number of fans in, and also the depth of, a fan system using the special mounting components shown in figure 1. The mounting component in figure 7 makes it possible to mount fans (101) between the separation distance given by each fan's cut-outs for fastening with a rubber component as per figure 3.

## Claims

1. A mounting and installation system being adapted to build up an air transporter unit that increases the transport of hot or cool air from a unit, often named a radiator, this latter being the unit that delivers heating or cooling to its surrounding, adjoining space, the air transporter unit being adapted to be mounted on or next to the unit, often named a radiator, and the system being adapted to build up the air transporter unit in an arrangement which comprises:
a fan element made up of a number of fans (101);
mounting components being adapted to hold the arrangement in place; and
a chassis that is made up of a number of modules,
the modules comprising a left side piece (201), an intermediate piece (202), a fan mounting component (203) and a right side piece (204), and
the respective modules being provided with holes (210) and tabs (211) being adapted to easily snap together the modules according to a user's wishes, so that the number of fans and the thereto appertaining chassis modules can be widely varied and that these fans can be mounted to any desired width and depth, and
the whole arrangement, when mounted, being adapted to guide air towards said unit, often named a radiator, via the use of the chassis installed by using the mounting components, making it possible to vary the amount and speed of the air via different speeds of the fan motor(s).

2. A mounting and installation system according to claim 1, **characterized by** it being possible to mount the air transporter unit in conjunction with (either under, over, behind or in front) of commonly used radiators with the purpose of, via increased air flow, increasing the extraction of emitted temperature from said radiator.

3. A mounting and installation system according to any of the preceding claims, **characterized in, that** the fan comprises at least one fan or that several fans are connected together, as necessary, and the format is varied in two dimensions (most particularly width and depth) using the components of die mounting and installation system.

4. A mounting and installation system according to any of the preceding claims, **characterized in, that** several fans are connected together by use of a component (701) that is unique to the system.

5. A mounting and installation system according to any of the preceding claims, **characterized in, that** the fan (101) in the mounting and installation system is suspended using a vibration-damping material (301).

6. A mounting and installation system according to any of the preceding claims, **characterized in, that** the fan (101) is mounted using a component (301) in a vibration-damping material that simplifies and reduces the cost of production operations because, at mounting, said material can be stretched, thereby reducing in dimension and allowing it to be threaded through a hole, or corresponding opening(s), so that, when stretching ceases, said damper returns to the intended size and, when this happens in a mounting opening, connects the fan with a chassis component, the fan thus being mounted to a chassis component via the damper.

7. A mounting and installation system according to any of the preceding claims, **characterized in, that** the mounting and installation system contains an apparatus in the nature of an electronic or mechanical temperature sensor that, as a function of temperature, automatically controls the speed of said fan(s).

8. A mounting and installation system according to any of the preceding claims, **characterized in, that** the system contains an apparatus in the nature of moisture sensors that control the starting and the speed of the fan motor(s).

9. A mounting and installation system according to any of the preceding claims, **characterized in, that** the system contains temperature and/or moisture sensors that can give an alarm when there is a risk of condensation.

10. A mounting and installation system according to any of the preceding claims, **characterized in, that** there is provided an air dehumidifying unit, preferably wholly or partly integrated in a module.

## Patentansprüche

1. Montage- und Installationssystem, das dazu geeignet ist, eine Luftbeförderungseinheit aufzubauen, die die Beförderung von heißer oder kalter Luft von einer Einheit, die oft Radiator genannt wird, erhöht, wobei diese letztere die Einheit ist, die ein Heizen oder Kühlen zu ihrer Umgebung, einem angrenzenden Raum, liefert, wobei die Luftbeförderungseinheit dazu geeignet ist, an der oder am nächsten zu der Einheit, die oft Radiator genannt wird, montiert zu werden, und wobei das System dazu geeignet ist, die Luftbeförderungseinheit in einer Anordnung aufzubauen, die folgendes aufweist:
ein Ventilatorelement, das aus einer Anzahl von Ventilatoren (101) zusammengesetzt ist;
Montagekomponenten, die dazu geeignet sind, die Anordnung an einer Stelle zu halten; und
ein Gehäuse, das aus einer Anzahl von Modulen zusammengesetzt ist,
wobei die Module ein linksseitiges Teil (201), ein Zwischenteil (202), eine Ventilator-Montagekomponente (203) und ein rechtsseitiges Teil (204) aufweisen, und
wobei die jeweiligen Module mit Löchern (210) und Anhängen (211) versehen sind, die dazu geeignet sind, die Module gemäß Wünschen eines Anwenders auf einfache Weise ineinander einzurasten, so dass die Anzahl von Ventilatoren und dazugehörenden Gehäusemodulen weitreichend variiert werden kann und dass diese Ventilatoren bis zu irgendeiner erwünschten Breite und Tiefe montiert werden können, und
wobei die gesamte Anordnung, wenn sie montiert ist, dazu geeignet ist, Luft in Richtung zu der Einheit zu führen, die oft Radiator genannt wird, und zwar über die Verwendung des durch Verwenden der Montagekomponenten installierten Gehäuses, was es ermöglicht, die Menge und die Geschwindigkeit von Luft über unterschiedliche Geschwindigkeiten des Ventilatormotors (der Ventilatormotoren) zu variieren.

2. Montage- und Installationssystem nach Anspruch 1, **dadurch gekennzeichnet, dass** es möglich ist, die Luftbeförderungseinheit in Verbindung mit (entweder darunter, darüber, dahinter oder davor) den allgemein verwendeten Radiatoren mit dem Zweck eines Erhöhens der Extraktion von vom Radiator abgestrahlter Temperatur über einen erhöhten Luftstrom zu montieren.

3. Montage- und Installationssystem nach einem der vorangehenden Ansprüche, **dadurch gekennzeichnet, dass** der Ventilator wenigstens einen Ventilator aufweist oder dass mehrere Ventilatoren miteinander verbunden sind, wie es nötig ist, und das Format unter Verwendung der Komponenten des Montage- und Installationssystems in zwei Dimensionen (vorzugsweise bezüglich der Breite und der Tiefe) variiert ist.

4. Montage- und Installationssystem nach einem der vorangehenden Ansprüche, **dadurch gekennzeichnet, dass** mehrere Ventilatoren durch Verwendung einer Komponente (701) miteinander verbunden sind, die eindeutig für das System ist.

5. Montage- und Installationssystem nach einem der vorangehenden Ansprüche, **dadurch gekennzeichnet, dass** der Ventilator (101) in dem Montage- und Installationssystem unter Verwendung eines schwingungsdämpfenden Materials (301) aufgehängt bzw. abgefedert ist.

6. Montage- und Installationssystem nach einem der vorangehenden Ansprüche, **dadurch gekennzeichnet, dass** der Ventilator (101) unter Verwendung einer Komponente (301) in einem schwingungsdämpfenden Material montiert ist, das den Herstellungsbetriebsaufwand vereinfacht und reduziert, weil das Material beim Montieren gestreckt werden kann, um sich dadurch bezüglich der Dimension zu reduzieren und um dadurch zuzulassen, durch ein Loch oder eine entsprechende Öffnung (entsprechende Öffnungen) gezogen zu werden, so dass dann, wenn ein Strecken aufhört, der Dämpfer zu der beabsichtigten Größe zurückkehrt, und dann, wenn dies in einer Montageöffnung erfolgt, den Ventilator mit einer Gehäusekomponente verbindet, wobei der Ventilator somit über den Dämpfer an einer Gehäusekomponente montiert ist.

7. Montage- und Installationssystem nach einem der vorangehenden Ansprüche, **dadurch gekennzeichnet, dass** das Montage- und Installationssystem eine Vorrichtung in der Art eines elektronischen oder mechanischen Temperatursensors enthält, der die Geschwindigkeit des Ventilators (der Ventilatoren) als eine Funktion einer Temperatur automatisch steuert.

8. Montage- und Installationssystem nach einem der vorangehenden Ansprüche, **dadurch gekennzeichnet, dass** das System eine Vorrichtung in der Art von Feuchtigkeitssensoren enthält, die das Starten und die Geschwindigkeit des Ventilatormotors (der Ventilatormotoren) steuern.

9. Montage- und Installationssystem nach einem der vorangehenden Ansprüche, **dadurch gekennzeichnet, dass** das System Temperatur- und/oder Feuchtigkeitssensoren enthält, die einen Alarm abgeben können, wenn es ein Risiko einer Kondensation gibt.

10. Montage- und Installationssystem nach einem der vorangehenden Ansprüche, **dadurch gekennzeichnet, dass** eine Luftentfeuchtereinheit vorgesehen ist, die bevorzugt gänzlich oder teilweise in einem Modul integriert ist.

## Revendications

1. Système de montage et d'installation conçu pour former une unité de transport d'air qui accroît le transport d'air chaud ou froid depuis une unité, souvent appelée radiateur, cette dernière étant l'unité qui envoie du chaud ou du froid dans l'espace contigu qui l'environne, l'unité de transport d'air étant adaptée au montage sur ou à proximité de l'unité, souvent appelée radiateur, et le système étant conçu pour constituer l'unité de transport d'air dans un agencement qui comprend :
un élément ventilateur constitué de plusieurs ventilateurs (101),
des composants de montage conçus pour maintenir en place l'ensemble, et
un châssis, qui est constitué de plusieurs modules,
les modules comprenant une pièce située sur le côté gauche (201), une pièce intermédiaire (202), un composant de montage de ventilateur (203) et une pièce située sur le côté droite (204) et
les modules respectifs étant pourvus de trous (210) et de pattes (211) conçus pour emboîter facilement les modules, les uns avec les autres, conformément aux souhaits d'un utilisateur, de sorte que le nombre de ventilateurs et de modules de châssis associés puisse être largement varié et que ces ventilateurs puissent être montés sur n'importe quelle largeur et profondeur, et
l'intégralité de l'agencement, une fois monté, étant adapté à guider l'air vers ladite unité, souvent appelée radiateur, par le biais du châssis installé au moyen des éléments de montage, ce qui permet de varier la quantité d'air et la vitesse de l'air par l'intermédiaire de différentes vitesses du/des moteur/s de ventilateur.

2. Système de montage et d'installation suivant la revendication 1, **caractérisé en ce qu'**il est possible de monter l'unité de transport d'air conjointement à des radiateurs utilisés habituellement (soit au-dessous, au-dessus, à l'arrière ou à l'avant), en visant, par le biais d'un flux d'air augmenté, une extraction accrue de la température émise par ledit radiateur.

3. Système de montage et d'installation suivant une quelconque des revendications précédentes, **caractérisé en ce que** l'élément ventilateur comprend au moins un ventilateur ou **en ce que** plusieurs ventilateurs sont reliés entre eux en fonction des besoins et **en ce que** le format est varié dans deux dimensions (tout particulièrement, la largeur et la profondeur) en utilisant les composants du système de montage et d'installation.

4. Système de montage et d'installation suivant une quelconque des revendications précédentes, **caractérisé en ce que** plusieurs ventilateurs sont reliés entre eux par l'intermédiaire d'un composant (701) qui est unique dans le système.

5. Système de montage et d'installation suivant une quelconque des revendications précédentes, **caractérisé en ce que** dans le système de montage et d'installation, le ventilateur (101) est accroché au moyen d'un matériau amortissant les vibrations (301).

6. Système de montage et d'installation suivant une quelconque des revendications précédentes, **caractérisé en ce que** le ventilateur (101) est monté par l'intermédiaire d'un composant (301) en un matériau amortissant les vibrations qui simplifie et réduit le coût des opérations de fabrication, étant donné qu'au montage, ledit matériau peut être allongé, ce qui réduit sa dimension et permet de l'enfiler à travers un trou ou une (des) ouverture(s) correspondante(s), de sorte que lorsque l'allongement s'arrête, ledit amortisseur retourne à la taille prévue et, si cela a lieu dans une ouverture de montage, il relie le ventilateur à un élément du châssis, le ventilateur étant donc monté à un élément du châssis par l'intermédiaire de l'amortisseur.

7. Système de montage et d'installation suivant une quelconque des revendications précédentes, **caractérisé en ce que** le système de montage et d'installation comporte un appareil de type capteur de température électronique ou mécanique, qui règle automatiquement la vitesse dudit (desdits) ventilateur(s) en fonction de la température.

8. Système de montage et d'installation suivant une quelconque des revendications précédentes, **caractérisé en ce que** le système comporte un appareil de type capteur d'humidité qui commande le démarrage et règle la vitesse du (des) moteur(s) du (des) ventilateur(s).

9. Système de montage et d'installation suivant une quelconque des revendications, **caractérisé en ce que** le système comporte des capteurs de température et/ou d'humidité qui peuvent émettre une alarme en cas de risque de condensation.

10. Système de montage et d'installation suivant une quelconque des revendications précédentes, **caractérisé en ce qu'**une unité de déshumidification d'air est prévue, de préférence entièrement ou partiellement intégrée dans un module.
